# EUROPEAN PATENT SPECIFICATION

(11) **EP 3 121 231 B1**
(45) Date of publication and mention of the grant of the patent: **03.05.2023**
(21) Application number: 16180859.7
(22) Date of filing: 22.07.2016
(51) Int. Cl.: C08L 95/00

(54) **POLYPHOSPHORIC ACID RESISTANT HYDROGEN SULFIDE SCAVENGER FOR USE IN ASPHALT APPLICATIONS**
POLYPHOSPHORSÄURERESISTENTE SCHWEFELWASSERSTOFFSCAVENGER ZUR VERWENDUNG IN ASPHALTANWENDUNGEN
FIXATEUR DE SULFURE D'HYDROGÈNE RÉSISTANT À L'ACIDE POLYPHOSPHORIQUE DESTINÉ À ÊTRE UTILISÉ DANS DES APPLICATIONS D'ASPHALTE

(30) Priority: 23.07.2015 US 201562196139 P; 19.07.2016 US 201615213927
(43) Date of publication of application: 25.01.2017
(73) Proprietor: Baker Hughes Holdings LLC, Houston, TX 77073 (US)
(72) Inventor: POLAND, Ross Rivers, Houston, TX Texas 77006 (US); BIGGERSTAFF, Paul J., Sugar Land, TX Texas 77498 (US); CATTANACH, Kyle C., Sugar Land, TX Texas 77498 (US); O'BRIEN, Timothy J., Sugar Land, TX Texas 77478 (US); WOLFE, Donald L., Baden, PA Pennsylvania 15005 (US); WEERS, Jerry J., Richmond, TX Texas 77406 (US); BARNES, Matthew T., Houston, TX Texas 77047 (US)
(74) Representative: Novagraaf Group

(56) References cited:
- FR-A1- 3 013 051
- US-A1- 2013 092 597

## Description

### BACKGROUND

### Field of the Invention

The presently disclosed subject matter relates generally to asphalt production, and in particular, to asphalt production employing chemical additives.

### Description of the Related Art

Asphalt is a viscous substance derived from crude petroleum and used in paving and road construction materials or as roofing shingles. A common asphalt modifying agent is polyphosphoric acid (PPA). PPA can be added to asphalt compositions to increase the binder stiffness of the asphalt mix and to reduce the susceptibility of the asphalt binder to aging.

A rising concern in the asphalt industry is the generation of hydrogen sulfide (H₂S) caused by modification of asphalt using polyphosphoric acid. H₂S is toxic and corrosive, which are factors that make asphalt production more dangerous and costly. H₂S scavenging additives consisting of zinc-based compounds are frequently used to reduce H₂S content in asphalt. There is growing evidence; however, that use of PPA during asphalt production can reduce the effectiveness of these zinc-based, and other, H₂S scavengers.

There is a need for new scavengers that are resistant to the effects of PPA. Improvements in this field of technology are therefore desired.

### SUMMARY

In certain aspects, a method for reducing hydrogen sulfide emissions from an asphalt composition by scavenging the hydrogen sulfide is provided wherein 50 to 10,000 ppm of an additive is mixed with the asphalt composition and the additive comprises a hydrogen sulfide scavenger is a copper-based complex. The copper-based complex comprises copper carbonate. The ratio of the hydrogen sulfide concentration before scavenging to the concentration of the additive is in the range of 20:1 to 1:1. The asphalt composition can include asphalt and an asphalt modifying acid. The hydrogen sulfide can be one or more of latent hydrogen sulfide, hydrogen sulfide produced by cracking and hydrogen sulfide produced by regenerative processes caused by the asphalt modifying agent being added to the asphalt composition. The asphalt modifying acid can be polyphosphoric acid. The asphalt modifying acid can also be an inorganic acid. The inorganic acid can be phosphoric acid or a phosphonate derivative. The asphalt modifying acid can be a salt or organic ester of an inorganic acid. The salt can be sodium phosphate. The additive can include one or more components from the group consisting of zinc carboxylate, a dispersion of zinc particles, and an amine aldehyde condensate. The organic acid can be one or more from the group consisting of octanoic acid isomers (such as 2-ethylhexanoic acid), neodecanoic acid, naphthenic acid, isobutyric acid, and other oil soluble synthetic carboxylic acids.

In another aspect, a method for reducing hydrogen sulfide emissions from an asphalt composition is provided wherein 50 to 10,000 ppm of an additive is mixed with the asphalt composition and the additive comprises a hydrogen sulfide scavenger which is a mixture of copper-based and iron-based complexes. The copper-based complex comprises copper carbonate. The ratio of the hydrogen sulfide concentration before scavenging to the concentration of the additive is in the range of 20:1 to 1:1. The asphalt composition can include asphalt and an asphalt modifying acid. The hydrogen sulfide can be one or more of latent hydrogen sulfide, hydrogen sulfide produced by cracking and hydrogen sulfide produced by regenerative processes caused by the asphalt modifying agent being added to the asphalt composition. The asphalt modifying acid can be polyphosphoric acid. The asphalt modifying acid can be an inorganic acid. The inorganic acid can be phosphoric acid or a phosphonate derivative. The asphalt modifying acid can be a salt or organic ester of an inorganic acid. The salt can be sodium phosphate. The iron-based complex can include one or more components from the group consisting of iron carbonate, iron hydroxide and iron oxide. The iron-based complex can include iron carboxylate. The iron carboxylate can be an oil-soluble metal organic. The iron-based complex can be formed by reacting iron with an organic acid and diluting the organic acid with an organic solvent. The additive can further include one or more components from the group consisting of zinc carboxylate, a dispersion of zinc particles, and an amine aldehyde condensate. The organic acid can be one or more from the group consisting of octanoic acid isomers (such as 2-ethylhexanoic acid), neodecanoic acid, naphthenic acid, isobutyric acid, or other synthetic carboxylic acids.

### BRIEF DESCRIPTION OF THE DRAWINGS

FIG. 1 is a line graph comparing H₂S reduction in asphalt before and after PPA addition for the presently disclosed additives and other additives in an illustrative embodiment.
FIG. 2 is a bar graph comparing percentages of scavenged H₂S before and after PPA addition for the presently disclosed additives and other additives in an illustrative embodiment.

### DETAILED DESCRIPTION

Disclosed herein are various illustrative embodiments of a method and composition for reducing hydrogen sulfide generated or emitted from an asphalt composition. For the purposes of this application, the term "asphalt" refers to any of a variety of materials that are solid or semisolid at 25° C and which may gradually liquefy when heated, and in which the predominant constituents are naturally occurring bitumens (or kerogens) or which are bitumen like materials obtained as residues in, for example, petroleum refining. The asphalt may ultimately be used, for example, as paving and road-building materials or as roofing shingles.

Hydrogen sulfide may be present in asphalt as a naturally occurring material, especially in asphalts derived from kerogens. Oil which is heavily contaminated with sulfur, sometimes referred to in the art as sour crude, may also produce bottoms that have carried over hydrogen sulfide. Any asphalt which has a sulfur component may spontaneously emit hydrogen sulfide through a cracking process caused by heating the asphalt.

In certain illustrative embodiments, hydrogen sulfide present in asphalt is "scavenged" using a method including mixing an additive with the asphalt either prior to or concurrent with heating the asphalt. For the purposes of the present application, the term "scavenging" or the like means that an additive interacts with hydrogen sulfide in asphalt such that gaseous emissions of hydrogen sulfide from the asphalt are mitigated or eliminated.

In certain illustrative embodiments, the presently disclosed subject matter pertains to asphalt compositions containing asphalt modifiers such as polyphosphoric acid or "PPA." PPA can refer specifically to polyphosphoric acid, or any other inorganic acid, including phosphoric acid, or phosphonate derivatives. This can also refer to salts of the inorganic acids, such as sodium phosphate or organic esters of said acids. PPA can cause certain hydrogen sulfide scavengers to lose their effectiveness and revert back to hydrogen sulfide after scavenging. Scavengers react chemically with hydrogen sulfide to produce a nonvolatile compound. In the case of zinc-based scavengers, they produce zinc sulfide. Under acidic conditions, zinc sulfide will react to produce H₂S. An example of the chemical process is as follows:

Zn(ligand)ₓ + x H₂S → ZnS + x H(ligand)

1/x ZnS + Hₓ(acid) → 1/x H₂S + x acid⁻

Sources of H₂S in asphalt can be latent, or the H₂S can be produced from heavy aromatic sulfur asphaltenes via cracking, can be generated from added elemental sulfur, or can be regenerated when PPA (or other acids) are added to asphalt including scavenging products like zinc sulfide.

Disclosed herein are additives that act as scavengers and are resistant to the addition of the asphalt modifier to the asphalt. The scavenger can be added at any point in the asphalt production process to effectively reduce H₂S levels, including before or after addition of the asphalt modifier. Preferably, the scavenger is added before the asphalt modifier. Further, the presence of other hydrogen sulfide scavenging additives, whether metal based or otherwise, does not reduce the effectiveness of the presently disclosed additives.

In addition to PPA, the presently disclosed subject matter is believed to be effective with other asphalt modifiers such as strong acids, mineral acids or organic acids used during asphalt manufacturing for the purpose of modifying asphalt properties.

In certain illustrative embodiments, a method is provided for reducing hydrogen sulfide emissions from an asphalt composition containing an asphalt modifier whereby an additive is mixed with the asphalt composition, the additive comprising a copper-based complex. The copper-based complex comprises copper carbonate.

In another illustrative embodiment, a method is provided for reducing hydrogen sulfide emissions from an asphalt composition containing an asphalt modifier whereby an additive is admixed with the asphalt composition, the additive comprising a mixture of copper-based and iron-based complex. The copper-based complex comprises copper carbonate. As used herein, the term iron-based complex means any iron containing material. In one aspect, the iron-based complex can include one or more components from the group consisting of iron carbonate, iron hydroxide and iron oxide. These components can be in dispersed particle form. In another aspect, the iron-based complex can include iron carboxylate. The iron carboxylate can be an oil-soluble metal organic.

The presently disclosed additive may be a dispersion of particles within an organic solvent, for example, isoparaffinic solvents such as isopar M or L, using a dispersant chemical. Preferably, the presently disclosed additive is an oil soluble complex and can be manufactured by dissolving an iron oxide in an appropriate organic acid such as 2-ethylhexanoic acid (equivalent to octanoic acid), neodecanoic acid, isobutyric acid, naphthenic acid, or a mixture of the aforementioned acids (or other useful synthetic carboxylic acids), followed by dilution of the complex with an organic solvent, for example, isoparaffinic solvents such as isopar M or L. In any case, the additives can be applied to a stream of asphalt by conventional pump and injection methods which are well known to those skilled in the art. Other metal based additives besides copper and iron may also be utilized, such as, without limitation, chromium.

Preferably, active components of the oil soluble complexes can be iron (II) carboxylate, or iron (III) carboxylate, where carboxylate can be any of the organic acids mentioned previously herein, or any combination thereof. The solvent used can consist of an aromatic solvent such as Exxon Aromatic 100 or 150, or isoparaffinic solvents such as Isopar M or L and a cosolvent consisting of glycol ether such as 2-butoxyethanol or glycol such as ethylene or propylene glycol. A typical formulation (by mass) is 50-80% metal carboxylate, 20-50% primary solvent and 1-5% cosolvent, in certain illustrative embodiments. For the dispersion type products, active components can be copper carbonate, iron carbonate, hydroxide, or oxide in isoparaffinic solvent such as isopar M or L. Aromatics typically aren't used for dispersion type products. A typical formulation (by mass) is 30-70% metal particles, 40-60% solvent, and 1-10% dispersant.

In general, the presently disclosed additives may be introduced into the asphalt at any temperature or concentration useful to the intended end result. For example, the additive can be applied during production conditions, or when the asphalt is liquid. Without adequate asphalt fluidity, proper mixing of the active component of the scavenger into the asphalt is more difficult and there is substantially reduced contact between the additive and H₂S, so the additive would appear to be ineffective.

The dosage rates range from 20:1 to 1:1, preferably about 10:1 to 1:1, where the ratio refers to the ratio of the H₂S concentration to the concentration of the additive. The dosage rates are in the range of 50 to 10,000 ppm of additive, preferably 200 to 1,000 ppm.

The presently disclosed additives can scavenge and retain H₂S under extreme conditions, which cause other traditional scavengers to revert the scavenged H₂S. For example, the presently disclosed additives are effective at temperatures in excess of 176.7 °C - 204.4 °C (350 °F - 400 °F), and the high temperature conditions actually help the scavenging reaction proceed more quickly. The presently disclosed additives can do this less expensively than traditional organic-based scavengers. Many conventional organic-based scavengers will decompose at higher temperatures, thereby reducing effectiveness and cost efficiency.

Optionally, other viable scavengers can also be added to the asphalt composition such as zinc carboxylates, zinc particulate dispersions, and amine aldehyde condensates. The asphalt composition may also contain other typical materials as would be known to those skilled in the art such as elemental sulfur (for improved asphalt properties) and polyisobutylene or other polymer modifying agents.

The presently disclosed additives scavenge latent and cracked H₂S and also prevent the regeneration of H₂S from scavenging products caused by the addition of PPA or other asphalt modifying agents. This differs from conventional additives (like, but not limited to zinc octoate) in that the asphalt is resistant to regeneration due to PPA addition. Notably, the prevention of PPA-based H₂S regeneration is not accomplished by deactivating PPA and thus at the expense of the quality of the resulting asphalt. Instead, PPA addition will still accomplish its desired asphalt modification in the presence of the presently disclosed additives.

In addition to asphalt compositions, the presently disclosed additives are also effective when used in in asphalt-producing streams such as vacuum tower bottoms, vacuum gas oil, number 6 fuel oil and other hydrocarbon streams upstream of asphalt, in certain illustrative embodiments.

To facilitate a better understanding of the presently disclosed subject matter, the following examples of certain aspects of certain embodiments are given.

### Example 1

This first set of experiments was run in asphalt held at 148.9 °C (300 °F), and the testing was performed at a laboratory of one of Applicant's customers. The scavenging efficacy of several additives was tested at several dosages before and after polyphosphoric acid (PPA) was applied to the asphalt sample in question. The organic imine was derived from monoethanolamine and n-butyraldehyde and is commercially available from Baker Hughes Incorporated under the trade name SULFIX^{™} 9260. The test results show that zinc octoate treatment loses effectiveness after PPA is added. The copper carbonate and organic imine additives maintain their effectiveness much better than zinc octoate. Very notably, the copper compound maintains greater than 90% of its scavenging efficacy at a 10:1 dose rate, which is a very common starting dose rate for industrial applications. Also importantly, a small dosage of the copper additive outperforms a much more concentrated dose of the zinc additive after PPA addition.

The results of the testing from Example 1 are shown in Table 1 and Table 2 below. The dose rates referred to in the Tables are the ratio of the H₂S concentration (as measured in the sample headspace) to the additive concentration.

| **Table 1** | | | | | | | | |
|---|---|---|---|---|---|---|---|---|
| H₂S Scavenging *before* PPA Addition | | | | | | | | |
| **Product** | **[H₂S], ppm** | | | | **% H₂S Reduction** | | | |
| | **2:1** | **5:1** | **10:1** | **20:1** | **2:1** | **5:1** | **10:1** | **20:1** |
| Blank **(comparative)** | 9,000 | | | | | | | |
| **Organic Imine (comparative)** | **450** | **500** | **1,050** | **2,500** | **95.0%** | **94.4 %** | **88.3%** | **72%** |
| Copper Carbonate | 0 | 0 | 160 | 1,100 | 100.0% | 100.0% | 98.2% | 88% |
| **Zinc Octoate (comparative)** | **0** | **0** | **0** | **1,000** | **100.0%** | **100.0%** | **100.0%** | **89%** |

| **Table 2** | | | | | | | | |
|---|---|---|---|---|---|---|---|---|
| H₂S Scavenging *after* PPA Addition | | | | | | | | |
| **Product** | **[H₂S], ppm** | | | | **% H₂S Reduction** | | | |
| | **2:1** | **5:1** | **10:1** | **20:1** | **2:1** | **5:1** | **10:1** | **20:1** |
| Blank | 9,000 | | | | | | | |
| **Organic Imine** | **2,000** | **2,000** | **2,200** | **3,000** | **77.8%** | **77.8%** | **75.6%** | **66.7%** |
| Copper Carbonate | 0 | 0 | 400 | 4,000 | 100.0% | 100.0% | 95.6% | 55.6% |
| **Zinc Octoate** | **3,500** | **8,000** | **9,000** | **9,000** | **61.1%** | **11.1%** | **0.0%** | **0.0%** |

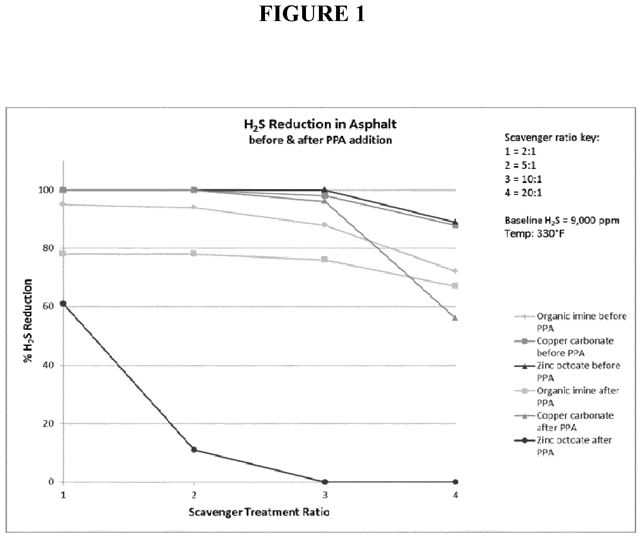

A line graph showing the results of the testing of Example 1 is shown in FIG. 1.

### Example 2

This second set of experiments was run in Applicant's labs in Sugar Land, Texas. The solvent used was Isopar M^{™} fluid from ExxonMobile Chemical rather than asphalt, and the tests were run at a much lower temperature, in this case 60 °C (140 °F). The same organic imine was used as in Example 1. Several copper-based additives were tested. Notably, a similar level of stability for the copper carbonate additive referred to in Example 1 was observed. In addition, an iron complex demonstrated good reversion resistance.

The results of the testing from Example 2 are shown in Table 3 below:

| **Table 3** | | | | |
|---|---|---|---|---|
| | **ppm H₂S** | **% Scavenged** | **ppm H₂S** | **% Scavenged** |
| **Time** | Before PPA | | After PPA | |
| **Blank (comparative)** | 8000 | | 5000 | |
| **Copper Hydroxide 10:1 (comparative)** | **2000** | **75** | **350** | **93** |
| **Copper Hydroxide 20:1 (comparative)** | **6000** | **25** | **5000** | **0** |
| **Copper Octoate 10:1 (comparative)** | **5000** | **38** | **300** | **94** |
| **Copper Octoate 20:1 (comparative)** | **8000** | **0** | **5000** | **0** |
| **Copper Carbonate 10:1** | **500** | **94** | **0** | **100** |
| **Copper Carbonate 20:1** | **2000** | **75** | **200** | **96** |
| **Organic Imine 10:1 (comparative)** | **50** | **99** | **0** | **100** |
| **Organic Imine 20:1 (comparative)** | **300** | **96** | **0** | **100** |
| **Iron Octoate 10:1 (reference)** | **0** | **100** | **0** | **100** |
| **Iron Octoate 20:1 (reference)** | **100** | **99** | **0** | **100** |

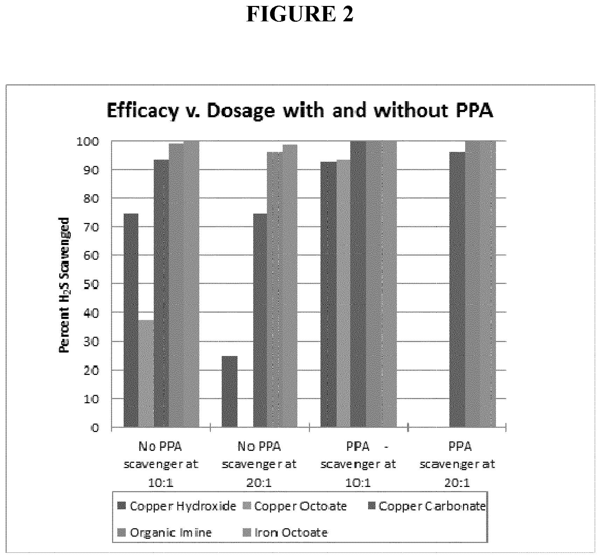

A bar graph showing the results of the testing of Example 2 is shown in FIG. 2.

## Claims

1. A method for reducing hydrogen sulfide emissions from an asphalt composition by scavenging the hydrogen sulfide, the method comprising:
mixing 50 to 10,000 ppm of an additive with the asphalt composition wherein the additive comprises a hydrogen sulfide scavenger selected from a copper-based complex, or a mixture of copper-based and iron-based complexes, wherein the copper-based complex comprises copper carbonate; and wherein the ratio of the hydrogen sulfide concentration before scavenging to the concentration of the additive is in the range of 20:1 to 1:1.

2. The method of claim 1, wherein the asphalt composition comprises asphalt and an asphalt modifying acid.

3. The method of claim 2, wherein the hydrogen sulfide is one or more of latent hydrogen sulfide, hydrogen sulfide produced by cracking and hydrogen sulfide produced by regenerative processes caused by the asphalt modifying agent being added to the asphalt composition.

4. The method of claim 2 or claim 3, wherein the asphalt modifying acid is polyphosphoric acid.

5. The method of claim 2 or claim 3, wherein the asphalt modifying acid is an inorganic acid.

6. The method claim 5, wherein the inorganic acid is phosphoric acid or a phosphonate derivative.

7. The method of claim 2 or claim 3, wherein the asphalt modifying acid is a salt or organic ester of an inorganic acid.

8. The method of claim 7, wherein the salt is sodium phosphate.

9. The method of any preceding claim, wherein the iron-based complex comprises one or more components from the group consisting of iron carbonate, iron hydroxide and iron oxide.

10. The method of any preceding claim, wherein the iron-based complex comprises iron carboxylate.

11. The method of claim 10, wherein the iron carboxylate is an oil-soluble metal organic.

## Patentansprüche

1. Verfahren zum Reduzieren von Schwefelwasserstoffemissionen aus einer Asphaltzusammensetzung durch Scavenging (chemisches Reinigen) des Schwefelwasserstoffs, wobei das Verfahren Folgendes umfasst:
Mischen von 50 bis 10.000 ppm eines Additivs mit der Asphaltzusammensetzung, wobei das Additiv einen Schwefelwasserstoff-Scavenger umfasst, der aus einem kupferbasierten Komplex oder einer Mischung aus kupferbasierten und eisenbasierten Komplexen ausgewählt ist, wobei der kupferbasierte Komplex Kupfercarbonat umfasst; und wobei das Verhältnis der Schwefelwasserstoffkonzentration vor dem Scavenging zu der Konzentration des Additivs in dem Bereich von 20:1 bis 1:1 liegt.

2. Verfahren nach Anspruch 1, wobei die Asphaltzusammensetzung Asphalt und eine Asphaltmodifizierungssäure umfasst.

3. Verfahren nach Anspruch 2, wobei der Schwefelwasserstoff ein oder mehrere von latentem Schwefelwasserstoff, Schwefelwasserstoff, der durch Cracken hergestellt ist, und Schwefelwasserstoff, der durch regenerative Prozesse hergestellt ist, die durch das Asphaltmodifizierungsmittel bewirkt werden, das zu der Asphaltzusammensetzung hinzugefügt wird, ist.

4. Verfahren nach Anspruch 2 oder 3, wobei die Asphaltmodifizierungssäure Polyphosphorsäure ist.

5. Verfahren nach Anspruch 2 oder 3, wobei die Asphaltmodifizierungssäure eine anorganische Säure ist.

6. Verfahren nach Anspruch 5, wobei die anorganische Säure Phosphorsäure oder ein Phosphonatderivat ist.

7. Verfahren nach Anspruch 2 oder 3, wobei die Asphaltmodifizierungssäure ein Salz oder organischer Ester einer anorganischen Säure ist.

8. Verfahren nach Anspruch 7, wobei das Salz Natriumphosphat ist.

9. Verfahren nach einem der vorstehenden Ansprüche, wobei der eisenbasierte Komplex eine oder mehrere Komponenten aus der Gruppe, bestehend aus Eisencarbonat, Eisenhydroxid und Eisenoxid, umfasst.

10. Verfahren nach einem der vorstehenden Ansprüche, wobei der eisenbasierte Komplex Eisencarboxylat umfasst.

11. Verfahren nach Anspruch 10, wobei das Eisencarboxylat ein öllösliches organisches Metall ist.

## Revendications

1. Procédé de réduction d'émissions de sulfure d'hydrogène provenant d'une composition d'asphalte en piégeant le sulfure d'hydrogène, le procédé comprenant :
le mélange de 50 à 10 000 ppm d'un additif avec la composition d'asphalte dans lequel l'additif comprend un agent de piégeage de sulfure d'hydrogène choisi parmi un complexe à base de cuivre, ou un mélange de complexes à base de cuivre et à base de fer, dans lequel le complexe à base de cuivre comprend du carbonate de cuivre ; et dans lequel le rapport entre la concentration en sulfure d'hydrogène avant piégeage et la concentration de l'additif est dans la plage de 20:1 à 1:1.

2. Procédé selon la revendication 1, dans lequel la composition d'asphalte comprend de l'asphalte et un acide modifiant l'asphalte.

3. Procédé selon la revendication 2, dans lequel le sulfure d'hydrogène est un ou plusieurs parmi le sulfure d'hydrogène latent, le sulfure d'hydrogène produit par craquage et le sulfure d'hydrogène produit par des processus régénératifs provoqués par l'ajout de l'agent modifiant l'asphalte à la composition d'asphalte.

4. Procédé selon la revendication 2 ou la revendication 3, dans lequel l'acide modifiant l'asphalte est de l'acide polyphosphorique.

5. Procédé selon la revendication 2 ou la revendication 3, dans lequel l'acide modifiant l'asphalte est un acide inorganique.

6. Procédé selon la revendication 5, dans lequel l'acide inorganique est de l'acide phosphorique ou un dérivé de phosphonate.

7. Procédé selon la revendication 2 ou la revendication 3, dans lequel l'acide modifiant l'asphalte est un sel ou un ester organique d'un acide inorganique.

8. Procédé selon la revendication 7, dans lequel le sel est du phosphate de sodium.

9. Procédé selon l'une quelconque revendication précédente, dans lequel le complexe à base de fer comprend un ou plusieurs composants parmi le groupe constitué par du carbonate de fer, de l'hydroxyde de fer et de l'oxyde de fer.

10. Procédé selon l'une quelconque revendication précédente, dans lequel le complexe à base de fer comprend du carboxylate de fer.

11. Procédé selon la revendication 10, dans lequel le carboxylate de fer est un organique métallique soluble dans l'huile.
